# EUROPEAN PATENT SPECIFICATION

(11) **EP 2 520 176 B1**
(45) Date of publication and mention of the grant of the patent: **20.02.2019**
(21) Application number: 11170890.5
(22) Date of filing: 22.06.2011
(51) Int. Cl.: A23K 10/30, A23K 20/24, A23K 50/75, A23K 50/30, A23K 20/105

(54) **Method for increasing the nutritional value of rapeseed and rape products with decreased oil content**
Verfahren zur Steigerung der Ernährungswerte von Raps-Samen, sowie Raps-Produkten mit vermindertem Ölgehalt
Procédé pour augmenter la valeur fourragére des produits de graine de navette ou de navette á teneur en huile réduite

(30) Priority: 02.05.2011 HU 1100226
(43) Date of publication of application: 07.11.2012
(73) Proprietor: ROP Repce-olaj-pellet Kft., 2440 Szazhalombatta (HU)
(72) Inventor: Pandur, József, 2030 Érd (HU); Fekete, Imre, 2440 Százhalombatta (HU); Bakos, Zoltán, 2111 Szada (HU)
(74) Representative: Schläfer, Laszlo

(56) References cited:
- WO-A1-95/11598
- WO-A2-2007/082299
- DE-A1-102007 020 242
- US-A- 5 246 717
- US-A1- 2006 029 646
- US-A1- 2011 027 433
- DATABASE WPI Week 201024 Thomson Scientific, London, GB; AN 2010-D58600 XP002680328, & CN 101 669 589 A (ZUNYI JINDING AGRIC TECHNOLOGY CO LTD) 17 March 2010 (2010-03-17)
- DATABASE BIOSIS [Online] BIOSCIENCES INFORMATION SERVICE, PHILADELPHIA, PA, US; 1982, THOMPSON L U ET AL: "TREATMENT OF RAPESEED PROCESS EFFLUENTS WITH BENTONITE AND LIGNO SULFONATE", XP002680329, Database accession no. PREV198376038762 & THOMPSON L U ET AL: "TREATMENT OF RAPESEED PROCESS EFFLUENTS WITH BENTONITE AND LIGNO SULFONATE", CANADIAN INSTITUTE OF FOOD SCIENCE AND TECHNOLOGY JOURNAL, vol. 15, no. 4, 1982, pages 262-266, ISSN: 0315-5463
- GIMSING ET AL: "Adsorption of glucosinolates to metal oxides, clay minerals and humic acid", APPLIED CLAY SCIENCE, ELSEVIER SCIENCE, NL, vol. 35, no. 3-4, 8 February 2007 (2007-02-08), pages 212-217, XP005879086, ISSN: 0169-1317, DOI: 10.1016/J.CLAY.2006.08.008

## Description

The invention is defined in scope by the claims and relates to a method for treating rapeseed or rape products to increase their nutritional value.

The nutritional value of rape (*Brassica napus*) depends on its antinutritive substances. In rape products the amount of antinutritive erucic acid, tannic acid (tannin) and glucosinolate (mustard oil glucoside) fundamentally determines the feed intake and nutrient utilization efficiency of animals. Recently the erucic acid content of the "00" rape developed by plant breeding processes is so low (generally lower than 1 percent) that its nutrition physiological effect is negligible. Similarly to erucic acid, the tannic acid content of rapeseed can also be decreased significantly.

The glucosinolate concentration in currently grown cultivars is generally lower than 25 mmol/kg, which increases 1.5-fold in rape products (rapeseed grits or pellet) used for animal feeding after oil recovery. However, there may be significant differences in the glucosinolate content of various hybrids and cultivars. The glucosinolate content is expressed as sinigrin-equivalent, whose determination method is described by Hungarian Standard MSZ EN ISO 9167-1.

Glucosinolates have a goitrogenic effect, which is exerted indirectly. As the majority of iodine is found bound to tyrosine and plays an important role in carbohydrate metabolism, the proper quantity of iodine intake is essential for all animals. The indirect effect of goitrogenic substances, which can be found in high levels in crucifers, means that they can cause secondary iodine deficiency. Tannin, which makes the flavour of rapeseed grits displeasing, can substantially be classified as a glucoside, because in its molecule five gallic acid moieties are connected to one glucose moiety. Tanner's bark powder containing high quantity of tannin has been also used to treat diarrhea and enteritis (another ancient application is tanning).

As described in Horn, A., KeserI, J., Szentmihályi, S. (editors): Állattenyésztésünk fejlesztésének lehetőségei (Possibilities in Development of Stock-breeding) Mezőgazdasági Kiadó. Budapest, 1982*,* extracted rapeseed grits having low glucosinolate content can be fed without detrimental effects in the amounts as given in the following table:

| **Livestock/feed** | **Percentage of extracted rapeseed grits [%]** |
|---|---|
| Breeding and commodity hen feeds | 3.0-5.5 |
| Goose fattening | 3 |
| Lactating sow | 2 |
| Calf grower | 5 |
| Dairy cow feed | 9-12 |
| Young calf | 12.8-14.0 |
| Beef cattle | 10 |
| Sheep feeds | 3-5 |

According to recent experimental results [Atle M. Bones, John T. Rossiter: Phytochemistry 67 (2006) 1053-1067] plants that contain glycoside become poisonous when the enzyme myrosinase releases the glycan moiety from the glycosidic bond. Isothiocyanates, oxazolidones, nitriles and epithionitrils formed in the process are toxic [Galletti, S. et al., Soil Biology and Biochemistry, 30 (2008) 1-4]. Therefore, preconditioning methods (such as pulping, soaking) with similar effects (i.e. causing hydrolysis) will facilitate intoxication. The biological activity of decomposition products formed by barium chloride or silver nitrate treatment in alkaline (KOH, ammonia {GB2113970, CN1341851, CN101037448}, barium hydroxide) or aqueous suspensions can decrease the nutritional value of rape products [Fenwick, G.R., Heaney, R.K., Gmelin, R., Rakow, D., Thies, W., Glucosinalbin in Brassica napus - a re-evaluation, Zeitschrift fuer Pflanzenzuechtung 87, 254-259 (1981*)*].

Intensive heat treatment will reduce the rate of toxicity by inactivating the usually heat-sensitive myrosinase (EP 0534573). K. Oerlemans and coworkers [K. Oerlemans et al. Food Chemistry 95 (2006) 19-29] have measured 30-99 percent (depending on the chemical structure) degradation of glucosinolates after boiling at 120 °C for 40 minutes.

| **Process** | **Reference** |
|---|---|
| 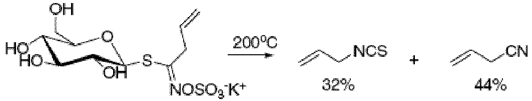 | Atle M. Bones a, John T. Rossiter: Phytochemistry 67 (2006) 1053-1067 |
| 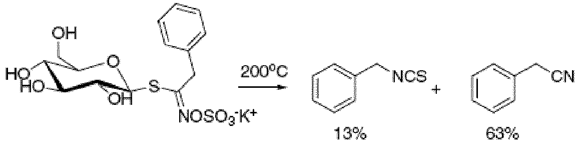 | K. Oerlemans et al.: Food Chemistry 95 (2006) 19-29 |

Szelényiné *et al.* [Szelényiné Galántai Marianne, Votisky Lászlóné, Dinnyés Lászlóné, Jécsai Györgyné, "Állattenyésztés és Takarmányozás" (Stock-breeding and Feeding) 39. (4) 369-79 (1990*)*] have supplemented a high (98-128 mmol/kg) glucosinolate content swine feed containing 10 % extracted rapeseed grits and 5% extracted soybean grits complemented with 1 mg/kg potassium iodide (KI), 150 mg/kg zinc chloride and 250 mg/kg copper sulphate as microelements. During the feeding trial they observed that protein utilization increased by 27 percent as compared to the diet fed without any complements.

A significant part of poultry feeds is constituted by soybean grits, which advantageously supplements the amino acid repertoire of cereals. However, soybean grits is an expensive feed and can be purchased almost exclusively from the American continent. The demand for lower feeding costs and produce economical products has led to the experimental investigation of using cheaper protein containing feeds, such as rapeseed grits, for the partial substitution of soybean grits in poultry feeding.

Halmágyiné *et al.* [Halmágyiné Valter, T., Gippert, T., Hullár, I. (1993) "Állattenyésztés és Takarmányozás" (Stock-breeding and Feeding), 42. 1. 65-78.] in their first experiment fed a fodder containing 10, 15 and 20 percent of rapeseed grits, while in their second experiment they fed a fodder containing 4, 8 and 12 percent of cold pressed rapeseed. After analyzing the results they came to the conclusion that whole rapeseed and cold pressed rapeseed are energy rich feeds which, beside protein supplementation, can be used to increase the energy content of broiler feeds. Chicken can digest the crude protein content of various rape products weaker than that of soybean grits. From among rape products the nutritives of extracted rapeseed grits have the best digestibility, slightly weaker is that of the cold pressed product, while the whole (full fat) rapeseed is the least digestible for poultry. According to their experimental results in broiler feed, pressed "00" rapeseed can be used in an amount of 4 to 8 percent for the partial protein-proportional substitution of soybean grits and for increasing the energy content of broiler's feeds. According to their observations, using a 12 percent dose will significantly worsen the body mass increase

The disadvantages of the above described methods for decreasing glucosinolate content are the following:
- because of the cost of the intervention, chemical soaking treatments and dry or wet heat treatment, will significantly increase the price of the product used for feeding;
- the concentration of copper used in microelement treatment significantly exceeds the rate permitted for animal feeding of 15-175 mg/kg referred to dry matter {as regulated in Regulation (EC) No. 1831/2003 [and in the FVM (Ministry of Agriculture and Rural Development) decree No. 44/2003. (IV. 26.) as deduced therefrom]}.

US 2011/027433 A1 discloses a process for eliminating unwanted substances from vegetable proteins comprising the steps of extracting the vegetable raw material by the use of an extracting agent and mixing the extract with an inorganic adsorber material. According to paragraph [0022] the preferred extracting agent is water. According to paragraph [0057] the inorganic adsorber material is selected from the groups of clays. Specifically example 5 describes the separation of sinapine and sinapinic acid from rapeseed extract obtained by extracting de-oiled rapeseed with water (see paragraph [0137]) by using natural clay minerals and hydrotalcite.

DE 10 2007 020242 A1 discloses biocatalyst based on clay mineral modified with thiocyanate, selenocyanate and/or selenite.

WO 2007/082299 A2 discloses nanoparticle compositions and methods for the preparation thereof which can be used for lubricating or coating an object. Said compositions contain solid lubricant nanoparticles in organic medium, inert alia ethyl and methyl esters of rapeseed oil (see paragraph [0023]).

WO 95/11598 A1 discloses pelletized feed for ruminants based on raw materials conventional in feeds, such as rapeseed including a carrier and an antibiotic that will inhibit the lactic acid production.

CN 101 669 589 discloses a condensed feed containing inter alia rapeseed meal and montmorillonite.

Thompson L.U. et al.: Canadian Institute of Food Science and Technology Journal 15(4), 262-266 (1982) discloses treatment of rapeseed process effluents with bentonite and ligno sulfonate, wherein the effluent from rapeseed protein concentration process is treated with various level of bentonite and sodium ligno sulfonate to recover the N and P and reduce the chemical O2 demand.

Gimsing A.L. et al.: Applied Clay Science 35(3-4), 212-217 (2007) discloses a study to investigate the adsorption of glucosinolates such as sinigrin to soil minerals and humic acid for the use of glucosinolate-containing plant tissue or seed meal for biofumigation. Both the adsorbents and the glucosinolates were used in the form of aqueous solution or suspension in the adsorption experiments (see paragraph 2.2.)

The object of the invention is to develop a method for decreasing the antinutritive effect of glucosinolate content of rapeseed or rape products remaining after the partial or complete recovery of the oil content of rapeseed, which method is free from the above mentioned disadvantages.

The invention is based on the unexpected finding that if rapeseed or a rape product remaining after the partial or complete recovery of the oil content of rapeseed is treated with an intercalation complex of an element belonging to the main group 2 or 3 of the periodic table with an anion and polymers, the glucosinolate-type substances will undergo a chemical conversion, the result of which is that the formed compounds are absorbed to a lesser degree than the level which would cause pathologic changes, and the rate of using the treated rape products solely depends on their nutritive value.

Therefore, the subject of the invention is a method for decreasing the antinutritive effect of glucosinolate content of rapeseed or a rape product remaining after the partial or complete recovery of the oil content of rapeseed, which method consists of the step of contacting the rapeseed or the rape product or its mixture formed with one or more other feeds with an intercalation complex of an element belonging to the main group 2 or 3 of the periodic table selected from Al, Ca and Mg formed with an anion and one or more polymers.

The rapeseed or rape product treated by the method of the invention may be used alone or in combination with common feeds (and optionally with premixes and/or additives) to feed animals.

The method of the invention is useful for treating rapeseed as such and/or a rape product with reduced oil content remaining after the partial or complete recovery of the oil content of rapeseed, such as any of a cold or hot pressed and/or extracted cake, pellet or grit or any mixtures thereof in arbitrary ratios. The mixture of the above mentioned rapeseed or rape product with one or more other fodders can also be treated in accordance with the invention.

According to the invention, the treatment is carried out with an intercalation complex of an element belonging to the main group 2 or 3 of the periodic table selected from Al, Ca and Mg formed with an anion and one or more polymers.

The components of the intercalation complex used according to the invention include a salt formed by an element belonging to the main group 2 or 3 of the periodic table selected from Al, Ca and Mg together with an anion, and any polymer.

In the salt of an element belonging to the main group 2 or 3 of the periodic table formed with an anion, those anions are preferred, which have greater reactivity against alkali metals occurring in rapeseed and rape products than against the elements belonging to the main group 2 or 3 of the periodic table.

Examples of such anions include inorganic anions, such as halides and pseudohalides, e.g., Cl, Br, I, SCN and CN, the anions of nitrogen oxoacids, e.g. nitrite and nitrate. The preferred inorganic anions which can be used are halides, such as Cl, Br and I, the anions of nitrogen oxoacids, such as nitrite and nitrate.

Additional examples of applicable anions include organic anions, such as anions which can be derived from aliphatic, alicyclic, aromatic and heteroaromatic carboxylic acids, hydroxycarboxylic acids and oxocarboxylic acids. Aliphatic, alicyclic, aromatic and heteroaromatic carboxylic acids, hydroxycarboxylic acids and oxocarboxylic acids can be exemplified by C₁₋₂₀ aliphatic, alicyclic, aromatic and heteroaromatic carboxylic acids, hydroxycarboxylic acids and oxocarboxylic acids, among which C₁₋₁₀ aliphatic, alicyclic, aromatic and heteroaromatic carboxylic acids, hydroxycarboxylic acids and oxocarboxylic acids can be preferably used.

As organic anions, the anions of Formula (I) can be particularly preferably used 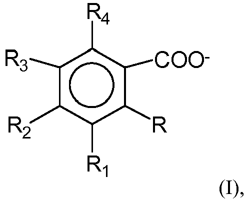 wherein
each of R, R¹, R², R³ and R⁴ independently represents H, OH, SO₃H, NO₂, COOH, halogen, C₁₋₁₀ alkyl, C₁₋₁₀ alkoxy, C₆₋₂₀ aralkoxy optionally substituted with one or more substituents, C₆₋₁₀ aryloxy optionally substituted with one or more substituents, wherein the substituents are individually selected from OH, SO₃H, NO₂, COOH, halogen, C₁₋₁₀ alkyl and C₁₋₁₀ alkoxy.

The anions of Formula (II) can also be preferably used as organic anions 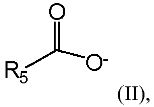 wherein
R⁵ represents H or CR⁶R⁷R⁸, wherein
each of R⁶, R⁷ and R⁸ independently represents H, OH, SO₃H, NO₂, COOH, halogen, C₁₋₂₀ alkyl, C₁₋₂₀ alkoxy, C₆₋₂₀ aralkoxy optionally substituted with one or more substituents, C₆₋₁₀ aryloxy optionally substituted with one or more substituents, wherein the substituents are individually selected from OH, SO₃H, NO₂, COOH, halogen, C₁₋₁₀ alkyl and C₁₋₁₀ alkoxy.

As used herein, "halogen atom" means fluorine, chlorine, bromine or iodine atom, preferably chlorine, bromine or iodine atom.

"C₁₋₁₀ alkyl" refers to a saturated or unsaturated, straight or branched chain hydrocarbon residue comprising from 1 to 10 carbon atoms. Preferred is C₁₋₈ alkyl, particularly C₁₋₆ alkyl, specifically C₁₋₄ alkyl. Examples of C₁₋₁₀ alkyl groups include methyl, ethyl, n- or iso-propyl, n-, iso- or tert-butyl, isomeric pentyl, hexyl, heptyl and octyl groups.

"C₁₋₂₀ alkyl" refers to a saturated or unsaturated, straight or branched chain hydrocarbon residue comprising from 1 to 20 carbon atoms. Among these, preferred are C₁₋₁₈ alkyl groups, particularly C₁₋₁₆ alkyl, especially C₁₋₁₄ alkyl. Examples of C₁₋₂₀ alkyl include methyl, ethyl, n- or isopropyl, n-, iso- or tert-butyl, isomeric pentyl, hexyl, heptyl and octyl groups, as well as saturated or unsaturated alkyl groups having longer chain length, such as dodecyl, tetradecyl, hexadecyl, octadecyl, 9-octadecenyl, 6,9,12-octadecatrienyl, cis- or trans-5,8,11,14-eicosatetraenyl.

"C₁₋₁₀ alkoxy" refers to any of the above defined C₁₋₁₀ alkyl groups linked through an oxygen atom. Examples of C₁₋₁₀ alkoxy include methoxy, ethoxy, n- or iso-propoxy, n-, iso- or tert-butoxy, isomeric pentoxy, hexoxy, heptoxy and octoxy groups.

"C₁₋₂₀ alkoxy" refers to any of the above defined C₁₋₂₀ alkyl groups linked through an oxygen atom. Examples of C₁₋₁₀ alkoxy include methoxy, ethoxy, n- or iso-propoxy, n-, iso- or tert-butoxy, isomeric pentoxy, hexoxy, heptoxy and octoxy groups, as well as saturated or unsaturated alkoxy groups having longer chain length, such as dodecyloxy, tetradecyloxy, hexadecyloxy, octadecyloxy, 9-octadecenyloxy, 6,9,12-octadecatrienyloxy, cis- or trans-5,8,11,14-eicosatetraenyloxy.

"C₆₋₂₀ aralkoxy" refers to an aryl group linked through an above defined alkoxy group comprising from 6 to 10 carbon atoms in the aryl moiety and from 1 to 10 carbon atoms in the alkoxy moiety. Examples of C₆₋₂₀ aralkoxy include phenylmethoxy, phenylethoxy, phenylpropoxy, phenylbutoxy, phenylpentoxy, naphthylmethoxy, naphthylethoxy, naphthylpropoxy and naphthylbutoxy.

"C₆₋₁₀ aryloxy" refers to an aryl group linked through an oxygen atom comprising from 6 to 10 carbon atoms in the aryl moiety. Examples of C₆₋₁₀ aryloxy include phenyloxy and naphthyloxy.

Preferred examples of the anions of Formula (I) include the anions that can be derived from the following acids: benzoic acid, 2-methylbenzoic acid, 3-chlorobenzoic acid, salicylic acid, acetyl salicylic acid, 2-nitrobenzoic acid, 4-toluenesulfonic acid, mandelic acid, 4-(dodecyloxy)benzoic acid, coumarinic acid, ferulic acid, sinapic acid, gallic acid, trimethoxybenzoic acid, homoveratrumic acid, 2-chloro-5-(trifluoromethyl)benzoic acid, 2,5-dimethoxy-3-nitrobenzoic acid, 2,6-dichloro-3-nitrobenzoic acid, 2-bromo-5-nitrobenzoic acid, 2-(4-chlorobenzoyl)benzoic acid, 1-naphtalenesulfonic acid, 8-hydroxy-5,7-dinitro-2-naphtalenesulfonic acid, phthalic acid, terephthalic acid, 4-(trifluoromethyl)phthalic acid, 3-nitrophthalic acid, monomethyl phthalate.

Preferred examples of the anions of Formula (II) include the anions that can be derived from the following acids: formic acid, chloroacetic acid, stearic acid, dichloroacetic acid, bromoacetic acid, trifluoroacetic acid, sulphoacetic acid, 3-nitropropionic acid, 3-hydroxybutyric acid, 3-decyloxypropionic acid, succinic acid, malic acid, pantothenic acid, tartaric acid, 2-oxoglutaric acid, glucuronic acid, citric acid, phenylacetic acid, (2-chlorophenyl)acetic acid, (2-(trifluoromethyl)phenyl)acetic acid, 4-(2-chloropropionyl)phenylacetic acid, 3,4-dimethoxyphenylacetic acid, 4-(benzyloxy)phenylacetic acid, 4-(bromomethyl)phenylacetic acid, mandelic acid, 2,3-dibenzoyltartaric acid, (4-cholorophenoxy)phenylacetic acid, bis(4-chlorophenoxy)acetic acid, EDTA.

Particularly preferred examples of applicable organic anions include the anions that can be derived from the following compounds: formic acid, capronic acid, lactic acid, dichloroacetic acid, sulfoacetic acid, oxalic acid, 2-oxoglutaric acid, succinic acid, malic acid, tartaric acid, citric acid, fumaric acid, maleic acid, fumaric acid monoethyl ester, ethyl malonate, phenylacetic acid, (2-chlorophenyl)acetic acid, 2-nitrobenzoic acid, 4-toluenesulfonic acid, 2,6-dichloro-3-nitrobenzoic acid, 2-bromo-5-nitrobenzoic acid, 2-(4-chlorobenzoyl)benzoic acid, 1-naphtalenesulfonic acid, ferulic acid, sinapic acid, gallic acid, trimethoxybenzoic acid, homoveratrumic acid, phthalic acid, terephthalic acid, 4-(trifluoromethyl)phthalic acid, 3-nitrophthalic acid, EDTA.

As metal salts the following compounds can be preferably used: aluminum formate, aluminum formacetate, aluminum citrate, aluminum chloride, aluminum 3-nitropropionate, magnesium benzoate, magnesium bromide, magnesium formate, magnesium caprylate, magnesium chloroacetate, magnesium lactate, magnesium oxalate, magnesium O-acetylsalicylate, calcium acetate, calcium chloroacetate, calcium monoethylfumarate, calcium glucanate, calcium nitrate, calcium pantothenate, calcium stearate, calcium and magnesium EDTA salt.

As metals salts the ones formed by an anion of organic and inorganic acids, which are stronger than those having a pKₐ value of 4.5 (measured in water) with an element belonging to the main group 2 or 3 of the periodic table can be particularly preferably used. Examples of such metal salts include aluminum formacetate, aluminum chloride, aluminum 3-nitropropionate, magnesium formate, magnesium oxalate, calcium chloroacetate, calcium monoethylfumarate, calcium nitrate.

Metal salts used in accordance with the invention are commercially available and/or can be readily produced by methods known *per se.*

Any organic polymer can be used as polymer, such as products prepared by physical treatment (e.g. by grinding or by milling methods known *per se*) from plant seeds or dried green forage, such as grits, meal, bran, germ, as well as protein and carbohydrate components thereof, preferably products prepared from grains (such as barley, wheat, corn, rye, triticale and the like), oilseeds (such as sunflower seed, soybean, rapeseed and the like), legume seeds (such as pea, lentil), and dried green forage (such as alfalfa and the like), particularly preferably wheat meal, corn gluten, potato starch, rapeseed grits and alfalfa meal.

Any inorganic polymer can also be used as polymers, for example clay minerals, silicates, kaolin and zeolites, preferably aluminum silicate, kaolin and zeolites.

According to the invention, mixtures of organic and inorganic polymers in any ratios can be preferably used. Preferred are mixtures of organic and inorganic polymers in 1:100-100:1 weight ratios, particularly in 1:10-10:1 weight ratios.

Polymers used in accordance with the invention are commercially available and/or can be readily produced by methods known *per se.*

The weight ratio of the salt of the element belonging to the main group 2 or 3 of the periodic table to the polymer is from 1/100 to 500/100, preferably from 10/100 to 90/100.

The intercalation complex used according to the invention is prepared by the usual methods. Preparation is preferably carried out by mixing a salt of the elements belonging to the main group 2 or 3 of the periodic table with the polymer at ambient temperature, usually at 15-30 °C, preferably at 22-25 °C.

In the method according to the invention the rapeseed or rape product or the mixture thereof with one or more other feeds is contacted with the said intercalation complex. To accomplish contacting the rapeseed or rape product or the mixture thereof with one or more other feeds is measured with the intercalation complex at ambient temperature, preferably at 15-30 °C, particularly preferably at 22-25 °C and blended to homogeneity

Blending can be carried out in any standard blending apparatus. Preferably, powder blenders, ribbon blenders and screw blenders can be used.

The proposed weight ratio of the intercalation complex to the rapeseed or rape product is usually from 1/10000 to 300/1000, preferably 1-50/1000.

The rapeseed or rape product treated by the method according to the invention is used as such for feeding animals, or processed to animal feed by mixing it with other fodders and optionally with premixes and/or additives commonly used for feeding. For this purpose the fodders, premixes and additives listed and permitted in Regulation (EC) No. 1831/2003 [and in FVM (Ministry of Agriculture and Rural Development) decree No. 44/2003. (IV. 26.) deduced therefrom] are usually used.

As feed component, the products listed in Annex No. 1 and 5 of FVM decree No. 44/2003. (IV. 26.) can be preferably used, among which particularly preferred are corn, wheat, barley, rye, triticale, soy products (e.g. extracted soybean grits), sunflower products (e.g. extracted sunflower seed grits), brewery by-products and the like.

As a premix, the premixes defined in point No. 1(1a-f) of FVM decree No. 44/2003. (IV. 26.) can be preferably used, for example concentrated supplements being added to feeds in amount of 0.5-10 weight%, comprising primarily vitamins, trace elements and minerals, amongst which particularly preferred are E 771, Protavit Minor (a dairy cow concentrate made by Bábolna Feed Ltd.), dairy cow complete mix + microelement premix, hen premix and the like.

As supplements, the supplements suitable for feeding as detailed in Annex No. 1 and 4 of FVM decree No. 44/2003. (IV. 26.) can be preferably used, among which preferred examples are veterinary compositions used for feeding, antioxidants (dodecyl gallate, tocopherol and the like), taste enhancers and appetite booster additives (saccharin, Neohesperidine Dihydrochalcon and the like), excipients, anti-clumping additives and lubricants (calcium stearate, perlite and the like), emulsifiers, stabilizators, filler materials and coagulants (agar-agar, dextran and the like), colouring agents, including pigments (capsanthin, lutein and the like), growth promoters (potassium diformate and the like), preservatives (sodium benzoate, boric acid and the like), minerals (sodium chloride and the like), acidity regulators (calcium hydroxide, dicalcium diphosphate, calcium phosphate, feed lime and the like), trace elements (cobalt, copper and the like), vitamins, pro-vitamins and such substances of similar activity which can be clearly defined chemically (vitamins A and B and the like), water absorbing substances, enzymes (alpha galactosidase, endo-1,3(4)beta-glucanase and the like), microorganisms, radionuclide-binding substances [ferric(III)-ammoniumhexacyanoferrate(II) and the like], products for improving the protein supply of animals and probiotics (L-lysine x HCl, D,L-methionine and the like) or mixtures thereof in any ratio. Particularly preferred examples of the supplements are the vitamins (such as vitamins A, B, C and E) and the salts (such as copper, iron, zinc and manganese salts).

Examples of animals that can be fed with rapeseed or rape product treated by the method according to the invention (or with feeds comprising them) include animals kept for breeding purposes and livestock, as well as wild animals including fish, fowls and mammals. Examples thereof include poultry, such as chickens, hens, ducks, geese and turkeys, as well as mammals, such as swine, sheep, cattle and horses.

Feeding is carried out by dispensing the usual amounts depending on various factors, such as the breed, age and general health condition of the animals. The dispensed amount can be precisely determined by a specialist. The daily feed amount is generally 5-200 g/kg, preferably 50-200 g/kg of body weight for poultry, and generally 1-200 g/kg, preferably 10-200 g/kg of body weight for mammals. Feeding is carried out one or more times a day.

The subject of the invention also includes a rapeseed or rape product treated by the above method and a feed that contains the same.

The advantage according to the method of the invention is that by using it the chemical alteration of the antinutritive glucosinolate-type substances of rapeseed and rape products can be simply and effectively achieved in standard equipments of feed processing plants, without any need for using separate (aqueous, acidic or alkaline) extraction and/or heat treatment (drying) processes. Rapeseed or rape products treated by the method according to the invention can be preferably used to substitute for much more expensive soy and soy products.

The invention is hereafter illustrated by the following examples without limiting the scope of the invention to them. In the following examples "% of DM" refers to percentage of dry matter.

### Example 1

The following components are measured to a 20 cm³ screw-cap container: 4.5 g magnesium O-acetylsalicylate (magnesium content: 16.0 %), 1.5 g wheat meal (dry matter: 8.5 %, crude protein content: 19.5 % of DM) and 1.5 g ground aluminum silicate (dry matter >95%, ion-exchange capacity: 0.6 mol/kg). The container containing the mixture is sealed, then shaken for 10 minutes at 22-25 °C on a "HAAKE SWB" 20 type shaker (n = 80/min).

150 g extracted rapeseed grits [glucosinate concentration: 27 mmol/kg (expressed as sinigrin); dry matter: 90.5 %, crude protein: 35.5 % of DM, crude fat: 2.1 % of DM, crude fibre: 14.0 % of DM) are measured to a 500 cm³ screw-cap container and the previously prepared powder mixture is added thereto. The container containing the mixture is sealed, then shaken for 10 minutes at 22-25 °C on a shaker (n = 80/min).

Using the rapeseed grits treated as described above, a laying hen feed with the following composition is prepared by a method known *per se.*
*Ingredients of 1000 g laying hen feed comprising rapeseed product [g]:* corn: 484, extracted soybean grits: 160, wheat: 100, rapeseed grits treated as detailed above: 150, feed lime: 56, 5% hen premix: 50.

The laying hen feed comprising the following ingredients without any rape product was used as a comparative control:
*Ingredients of 1000 g "soybean-only" control laying hen feed [g]:* corn: 533, extracted soybean grits: 261, wheat: 100, feed lime: 56, 5% laying hen premix: 50.

For the "Shaver-576" hybrid laying hens fed *ad libitum* for 90 days with the above detailed laying hen feed, the egg production yield and the results of organoleptic analysis of the eggs did not show any difference (within the error limit of the measurement method) from that of the control group fed with the feed without any rape product. Measurement results are detailed in Table 1.

### Example 2

The method was carried out as described in Example 1 with the difference that 3.0 g aluminum 3-nitropropionate was used instead of magnesium O-acetylsalicylate, 1.0 g alfalfa meal (dry matter: 9.5 %, crude protein content: 17.0 % of DM) was used instead of wheat meal, and ground aluminum silicate was replaced by 1.0 g zeolite (dry matter >95%, ion-exchange capacity: 0.5 mol/kg). The intercalation complex is admixed with 150 g cold pressed rapeseed grits [glucosinolate concentration: 26 mmol/kg (expressed as sinigrin); dry matter: 90.1 %, crude protein: 31.5 % of DM, crude fat: 8.1 % of DM, crude fibre: 12.3 % of DM). Measurement results are detailed in table 1.

**Table 1**

| **Daily egg production (pieces) and egg weight (kg/100 hens) results from the trial** | | | |
|---|---|---|---|
| | **Control feed with soy only** | **Feed containing treated rapeseed grits** | |
| | | **Example 1** | **Example 2** |
| Mean number of laying hens | 79.2 ± 0.37 | 79 ± 0.00 | 80 ± 0.00 |
| Mean egg production per day (pieces) | 62.52 ± 3.48 | 61.78 ± 3.74 | 63.68 ±3.37 |
| Eggs produced per day (kg/100 hens)* | 5.29 | 5.19 | 5.37 |

| | | | |
|---|---|---|---|
| *Calculated value (egg weight, kg x percent egg production)x100 | | | |

### Example 3

The following components are measured to a 20 cm³ screw-cap container: 4.5 g calcium nitrate (calcium content: 20 %), 1.5 g corn gluten (dry matter: 10 %, protein content: 58 % of DM) and 1.5 g kaolin (dry matter >95%, ion-exchange capacity: 0.8 mol/kg). The container containing the mixture is sealed, then shaken for 10 minutes at 22-25 °C on a "HAAKE SWB" 20 type shaker (n = 80/min).

150 g extracted rapeseed grits [glucosinate concentration: 27 mmol/kg (expressed as sinigrin); dry matter: 90.5 %, crude protein: 35.5 % of DM, crude fat: 2.1 % of DM, crude fibre: 14.0 % of DM) are measured to a 500 cm³ screw-cap container and the previously prepared powder mixture is added thereto. The container containing the mixture is sealed, then shaken for 10 minutes at 22-25 °C on a shaker (n = 80/min).

Using the rapeseed grits treated as described above, a swine fattening feed with the following composition is prepared by a method known *per se.* Ingredients of 1000 g fattening feed for 30-60 kg live weight pigs: corn: 480 g, extracted soybean grits: 130 g, barley: 200 g, treated rapeseed grits: 154 g, feed lime: 13 g, monocalcium phosphate: 11 g, sodium chloride: 4 g, L-lysine^{x}HCl: 2 g, D,L-methionine: 1 g, 0,5 % fattening premix: 5 g. As a control, a feed prepared with soy (which costs 40 % higher than the treated rapeseed grits) is used with the following composition: corn: 423 g, barley: 310 g, soy: 230 g, feed lime: 13 g, monocalcium phosphate: 11 g, sodium chloride: 4 g, L-lysine^{x}HCl: 2 g, D,L-methionine: 1 g, 0,5 % fattening premix: 5 g. During fattening of Topigs store-pigs (32±3 kg live weight, 50:50 sow to boar ratio) to 70 kg by feeding with the rapeseed-containing feed and the "soy only" feed, respectively, there is no detectable difference (within the error limit of the measurement method) in mortality (4 pigs in each case), meat yield and feed utilization efficiency indexes, despite the fact that the rapeseed-containing feed is cheaper by 5 percent than the control feed, which contained soy only.

**Table 2**

| **Weight gain and average feed intake of store-pigs** | | |
|---|---|---|
| | **"Soy only" control feed** | **Feed containing treated rapeseed** |
| Mean number of store-pigs | 390 ± 4 | 400 ± 6 |
| Mean weight gain [kg/pig] | 35.5 ± 3.48 | 35.7 ± 3.74 |
| Mean feed intake (kg/kg of body weight)* | 2.59 ± 0.08 | 2.55 ± 0.09 |

### Example 4

The following components are measured to a 20 cm³ screw-cap container: 4.5 g calcium chloroacetate (calcium content: 17,5 %) and 8.1 g potato-starch (starch content: 96 %). The container containing the mixture is sealed, then shaken for 10 minutes at 22-25 °C on a "HAAKE SWB" 20 type shaker (n = 80/min).

The following components are measured to a 3,000 cm³ screw-cap container: 330 g corn, 206 g wheat, 134 g Protavit Minor (a dairy cow concentrate made by Bábolna Feed Ltd.), 93 g dairy cow complete mix + microelement premix, 224.4 g treated and hot pressed rapeseed grits (glucosinolate concentration: 27 mmol/kg (expressed in sinigrin), dry matter: 92.5 %, crude protein: 32.5 % of DM, crude fat: 8.1 % of DM, crude fibre: 13.5 % of DM), and the previously prepared powder mixture is added thereto. The container containing the dairy cow feed mix with the above composition is sealed, then shaken for 10 minutes at 22-25 °C on a shaker (n = 80/min).

Using the rapeseed grits treated as described above, a dairy cow forage mix with the following composition is prepared by a method known *per se.* Ingredients of rape-containing dairy cow forage mix: 330 g corn, 206 g wheat, 237 g hot pressed treated rapeseed-grit, 134 g Protavit Minor (a dairy cow concentrate made by Bábolna Feed Ltd.), 93 g dairy cow complete mix + microelement premix. The soy-containing dairy cow forage blend prepared with soy (which costs 40 % higher than the treated rapeseed grits) has the following composition: 330 g corn, 237 g wheat, 206 g extracted soybean grits, 134 g Protavit Minor (a dairy cow concentrate), 93 g dairy cow complete mix + microelement premix.

Both groups (Holstein-Friesian breed) were also fed with a blend comprised of corn and wheat silage, potato, alfalfa hay and meadow hay. The cows milked two times a day had a daily feed intake of 10 kg/animal for the forage blend and 34 kg/animal for the other forage components. The composition of milk was measured on a weekly basis individually proportionally with the quantity of the milk in specimens collected from the morning and evening milking.

During the nine week feeding period there were no differences (within the error limit of the measurement method) between the two groups in the mean daily milk production, and in the milk fat content (3.8±0.4 weight%), milk protein content (3.4±0.3 weight%) and lactose content (4.7±0.2 weight%), despite the fact that the rapeseed-containing forage feed was cheaper by 8 percent on a per unit basis.

**Table 3**

| **Comparison of milk production of dairy cows fed with forage feeds containing treated rapeseed and soy, respectively** | | |
|---|---|---|
| | **Soy-containing feed** | **Feed comprising treated rapeseed** |
| Number of cows per groups | 15 | 15 |
| Number of lactations so far | 2.4 | 2.4 |
| Days from calving | 98 | 101 |
| Mean daily milk production at the beginning of the trial (kg/cow)* | 34.3 | 34.3 |
| Mean daily milk production during the 9 weeks of the trial (kg/cow) | 32.49 ± 4.77 | 33.03 ± 4.03 |

| | | |
|---|---|---|
| **Based on the mean milk production during a three week period before the beginning of the trial* | | |

## Claims

1. Method for decreasing the antinutritive effect of glucosinolate content of rapeseed or a rape product remaining after the partial or complete recovery of the oil content of rapeseed, which method consists of the step of contacting the rapeseed or the rape product or its mixture prepared with one or more other feeds with an intercalation complex of an element belonging to the main group 2 or 3 of the periodic table selected from Al, Ca and Mg formed with an anion and one or more polymers.

2. The method of claim 1, wherein the anion is selected from Cl, Br, I, nitrite and nitrate.

3. The method of claim 1, wherein the anion is selected from anions of Formula (I) 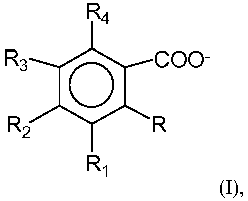 wherein
each of R, R¹, R², R³ and R⁴ independently represents H, OH, SO₃H, NO₂, COOH, halogen, C₁₋₁₀ alkyl, C₁₋₁₀ alkoxy, C₆₋₂₀ aralkoxy optionally substituted with one or more substituents, C₆₋₁₀ aryloxy optionally substituted with one or more substituents, wherein the substituents are individually selected from OH, SO₃H, NO₂, COOH, halogen, C₁₋₁₀ alkyl and C₁₋₁₀ alkoxy.

4. The method of claim 1, wherein the anion is selected from the anions of Formula (II) 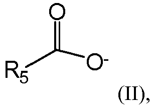 wherein
R⁵ represents H or CR⁶R⁷R⁸, wherein
each of R⁶, R⁷ and R⁸ independently represents H, OH, SO₃H, NO₂, COOH, halogen, C₁₋₂₀ alkyl, C₁₋₂₀ alkoxy, C₆₋₂₀ aralkoxy optionally substituted with one or more substituents, C₆₋₁₀ aryloxy optionally substituted with one or more substituents, wherein the substituents are individually selected from OH, SO₃H, NO₂, COOH, halogen, C₁₋₁₀ alkyl and C₁₋₁₀ alkoxy.

5. The method of claim 1, wherein the anion is selected from anions that can be derived from the following compounds: formic acid, capronic acid, lactic acid, dichloroacetic acid, sulfoacetic acid, oxalic acid, 2-oxoglutaric acid, succinic acid, malic acid, tartaric acid, citric acid, fumaric acid, maleic acid, fumaric acid monoethyl ester, ethyl malonate, phenylacetic acid, (2-chlorophenyl)acetic acid, 2-nitrobenzoic acid, 4-toluenesulfonic acid, 2,6-dichloro-3-nitrobenzoic acid, 2-bromo-5-nitrobenzoic acid, 2-(4-chlorobenzoyl)benzoic acid, 1-naphtalenesulfonic acid, ferulic acid, sinapic acid, gallic acid, trimethoxybenzoic acid, homoveratrumic acid, phthalic acid, terephthalic acid, 4-(trifluoromethyl)phthalic acid, 3-nitrophthalic acid, EDTA.

6. The method of any one of claims 1-5, wherein the polymer is selected from organic polymers, preferably wheat meal, corn gluten, potato starch, rapeseed grits and alfalfa meal, and from inorganic polymers, preferably aluminum silicate, kaolin and zeolites.

7. The method of any one of claims 1-6, wherein the contacting is carried out by agitation at ambient temperature.

8. The method of any one of claims 1-7, wherein the weight ratio of the salt formed by an element belonging to the main group 2 or 3 of the periodic table with an anion to the polymer is from 1/100 to 500/100, preferably from 10/100 to 90/100.

9. The method of any one of claims 1-8, wherein the weight ratio of the intercalation complex to the rapeseed or rape product is from 1/10000 to 300/1000, preferably from 1/1000 to 50/1000.

10. Rapeseed or rape product, or a mixture thereof formed with one or more other feeds obtainable by the method according to any of claims 1-9, wherein said rapeseed or rapeseed product contain an intercalation complex of an element selected from Al, Ca and Mg formed with an anion and one or more polymers.

11. Use of the rapeseed or the rape product, or of a mixture thereof formed with one or more other feeds according to claim 10 which contain an intercalation complex of an element selected from Al, Ca and Mg formed with an anion and one or more polymers, in animal feeding.

12. The use of claim 11, wherein the rapeseed or the rape product, which contain an intercalation complex of an element selected from Al, Ca and Mg formed with an anion and one or more polymers, is used alone or admixed with animal feeds and optionally with premixes and/or supplements.

13. Animal feed comprising rapeseed or rape product, or a mixture thereof formed with one or more other feeds according to claim 10 alone or admixed with animal feeds and optionally with premixes and/or supplements, wherein said rapeseed or rapeseed product contain an intercalation complex of an element selected from Al, Ca and Mg formed with an anion and one or more polymers.

## Patentansprüche

1. Verfahren zur Verminderung der antinutritiven Wirkung des Glucosinolatgehaltes von Rapssamen oder von nach der teilweisen oder vollständigen Entfernung des Ölgehaltes von Rapssamen zurückbleibenden Rapsprodukten, wobei das Verfahren aus dem Schritt der Behandlung der Rapssamen oder des Rapsproduktes oder eine Mischung von diesen mit einem oder mehreren weiteren Futtern mit einem Interkalationskomplex eines Elements gehörend zur Hauptgruppe 2 oder 3 des Periodensystems, ausgewählt aus Al, Ca und Mg, welches mit einem Anion und einem oder mehreren Polymeren gebildet ist, besteht.

2. Das Verfahren nach Anspruch 1, wobei das Anion aus Cl, Br, I, Nitrit und Nitrat ausgewählt ist.

3. Das Verfahren nach Anspruch 1, wobei das Anion aus Anionen der Formel (I) ausgewählt ist 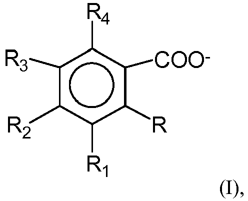 worin
R, R¹, R², R³ und R⁴ unabhängig voneinander jeweils für H, OH, SO₃H, NO₂, COOH, Halogen, C₁₋₁₀ Alkyl, C₁₋₁₀ Alkoxy, C₆₋₂₀ Aralkoxy, welches gegebenenfalls durch ein oder mehrere Substituenten substituiert ist, C₆₋₁₀ Aryloxy, welches gegebenenfalls durch ein oder mehrere Substituenten substituiert ist, worin die Substituenten einzeln aus OH, SO₃H, NO₂, COOH, Halogen, C₁₋₁₀ Alkyl und C₁₋₁₀ Alkoxy ausgewählt sind, stehen.

4. Das Verfahren nach Anspruch 1, wobei das Anion aus Anionen der Formel (II) ausgewählt ist 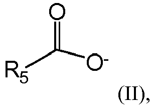 worin
R⁵ für H oder CR⁶R⁷R⁸ steht, worin
R⁶, R⁷ und R⁸ unabhängig voneinander für H, OH, SO₃H, NO₂, COOH, Halogen, C₁₋₂₀ Alkyl, C₁₋₂₀ Alkoxy, C₆₋₂₀ Aralkoxy, welches gegebenenfalls durch ein oder mehrere Substituenten substituiert ist, C₆₋₁₀ Aryloxy, welches gegebenenfalls durch ein oder mehrere Substituenten substituiert ist, worin die Substituenten einzeln aus OH, SO₃H, NO₂, COOH, Halogen, C₁₋₁₀ Alkyl und C₁₋₁₀ Alkoxy ausgewählt sind, stehen.

5. Das Verfahren nach Anspruch 1, wobei das Anion aus Anionen, welche von den folgenden Verbindungen abgeleitet sind, ausgewählt ist: Ameisensäure, Capronsäure, Milchsäure, Dichloressigsäure, Sulfoessigsäure, Oxalsäure, 2-Oxoglutarsäure, Bernsteinsäure, Apfelsäure, Weinsäure, Zitronensäure, Fumarsäure, Maleinsäure, Fumarsäure-monoethylester, Ethylmalonat, Phenylessigsäure, (2-Chlorophenyl)essigsäure, 2-Nitrobenzoesäure, 4-Toluensulfonsäure, 2,6-Dichlor-3-nitrobenzoesäure, 2-Brom-5-nitrobenzoesäure, 2-(4-chlorbenzoyl)benzoesäure, 1-Naphtalensulfonsäure, Ferulinsäure, Sinapinsäure, Gallussäure, Trimethoxybenzoesäure, Homoveratrumsäure, Phthalsäure, Terephthalsäure, 4-(Trifluormethyl)phthalsäure, 3-Nitrophthalsäure, EDTA.

6. Das Verfahren nach einem der Ansprüche 1 bis 5, wobei das Polymer aus organischen Polymeren, bevorzugt Weizenmehl, Maisgluten, Kartoffelstärke, Rapsgrütze und Afalfamehl, und aus anorganischen Polymeren, bevorzugt Aluminium-Silikat, Kaolin und Zeolith, ausgewählt ist.

7. Das Verfahren nach einem der Ansprüche 1 bis 6, wobei, die Behandlung durch Vermischen bei Umgebungstemperatur durchgeführt ist.

8. Das Verfahren nach einem der Ansprüche 1 bis 7, wobei das Gewichtsverhältnis vom Salz, welches aus einem Element gehörend zur Hauptgruppe 2 oder 3 des Periodensystems mit einem Anion gebildet ist, zum Polymer 1/100 bis 500/100, bevorzugt 10/100 bis 90/100, beträgt.

9. Das Verfahren nach einem der Ansprüche 1 bis 8, wobei das Gewichtsverhältnis des Interkalationskomplexes zu den Rapssamen oder Rapsprodukten 1/10000 bis 300/1000, bevorzugt 1/1000 bis 50/1000, beträgt.

10. Rapssamen oder Rapsprodukte, oder eine Mischung von diesen mit einem oder mehreren weiteren Futtern, welche durch das Verfahren nach einem der Ansprüche 1 bis 9 herstellbar sind, worin der Rapssamen oder das Rapsprodukt einen Interkalationskomplex eines Elements ausgewählt aus Al, Ca und Mg mit einem Anion und einem oder mehreren Polymeren enthält.

11. Verwendung von Rapssamen und Rapsprodukten oder einer Mischung von diesen mit einem oder mehreren weiteren Futtern nach Anspruch 10, welche eined Interkalationskomplex eines Elements ausgewählt aus Al, Ca und Mg mit einem Anion und einem oder mehreren Polymeren enthalten, zur Fütterung von Tieren.

12. Die Verwendung nach Anspruch 11, wobei die Rapssamen oder Rapsprodukte, welche einen Interkalationskomplex eines Elements ausgewählt aus Al, Ca und Mg mit einem Anion und einem oder mehreren Polymeren enthalten, allein oder mit Tierfuttern und gegebenenfalls mit Premixen und/oder Zusätzen vermischt verwendet sind.

13. Tierfutter enthaltend Rapssamen oder Rapsprodukte, oder eine Mischung von diesen mit einem oder mehreren weiteren Futtern nach Anspruch 10 allein oder mit Tierfuttern und gegebenenfalls mit Premixen und/oder Zusätzen vermischt, wobei die Rapssamen oder Rapsprodukte einen Interkalationskomplex eines Elements ausgewählt aus Al, Ca und Mg mit einem Anion und einem oder mehreren Polymeren enthalten.

## Revendications

1. Procédé de réduction de l'effet antinutritionnel de la teneur en glucosinolate des graines de colza ou d'un produit à base de colza restant après l'extraction partielle ou totale de la teneur en huile des graines de colza, lequel procédé consiste en l'étape de mettre en contact les graines de colza ou le produit à base de colza ou leur mélange préparé avec un ou plusieurs autres fourrages avec un complexe d'intercalation d'un élément appartenant au groupe principal 2 ou 3 du tableau périodique choisi parmi Al, Ca et Mg formé avec un anion et un ou plusieurs polymères.

2. Procédé selon la revendication 1, dans lequel l'anion est choisi parmi Cl, Br, I, le nitrite et le nitrate.

3. Procédé selon la revendication 1, dans lequel l'anion est choisi parmi les anions de formule (I) 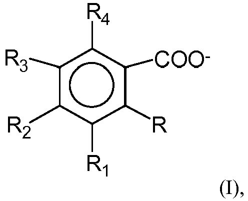 dans laquelle
chacun des R, R¹, R², R³ et R⁴ représente indépendamment H, OH, SO₃H, NO₂, COOH, halogène, alkyle en C₁₋₁₀, alcoxy en C₁₋₁₀, aralcoxy en C₆₋₂₀ éventuellement substitué par un ou plusieurs substituants, aryloxy en C₆₋₁₀ éventuellement substitué par un ou plusieurs substituants, dans lesquels les substituants sont choisis individuellement parmi OH, SO₃H, NO₂, COOH, halogène, alkyle en C₁₋₁₀ et alcoxy en C₁₋₁₀.

4. Procédé selon la revendication 1, dans lequel l'anion est choisi parmi les anions de formule (II) 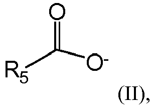 dans laquelle
R⁵ représente H ou CR⁶R⁷R⁸, dans lequel
chacun des R⁶, R⁷ et R⁸ représente indépendamment H, OH, SO₃H, NO₂, COOH, halogène, alkyle en C₁₋₂₀, alcoxy en C₁₋₂₀, aralcoxy en C₆₋₂₀ éventuellement substitué par un ou plusieurs substituants, aryloxy en C₆₋₁₀ éventuellement substitué par un ou plusieurs substituants, dans lesquels les substituants sont choisis individuellement parmi OH, SO₃H, NO₂, COOH, halogène, alkyle en C₁₋₁₀ et alcoxy en C₁₋₁₀.

5. Procédé selon la revendication 1, dans lequel l'anion est choisi parmi les anions pouvant être dérivés des composés suivants: acide formique, acide capronique, acide lactique, acide dichloroacétique, acide sulfoacétique, acide oxalique, acide 2-oxoglutarique, acide succinique, acide malique, acide tartrique, acide citrique, acide fumarique, acide maléique, ester monoéthylique de l'acide fumarique, malonate d'éthyle, acide phénylacétique, acide (2-chlorophényl)acétique, acide 2-nitrobenzoïque, acide 4-toluènesulfonique, acide 2,6-dichloro-3-nitrobenzoïque, acide 2-bromo-5-nitrobenzoïque, acide 2-(4-chlorobenzoyl)benzoïque, acide 1-naphtalènesulfonique, acide férulique, acide sinapique, acide gallique, acide triméthoxybenzoïque, acide homovératrumique, acide phtalique, acide téréphtalique, acide 4-(trifluorométhyl)phtalique, acide 3-nitrophtalique, EDTA.

6. Procédé selon l'une quelconque des revendications 1 à 5, dans lequel le polymère est choisi parmi les polymères organiques, de préférence la farine de blé, le gluten de maïs, l'amidon de pomme de terre, le gruau de colza et la farine de luzerne, et parmi les polymères inorganiques, de préférence le silicate d'aluminium, le kaolin et les zéolites.

7. Procédé selon l'une quelconque des revendications 1 à 6, dans lequel la mise en contact est réalisée par agitation à la température ambiante.

8. Procédé selon l'une quelconque des revendications 1 à 7, dans lequel le rapport pondéral du sel formé par un élément appartenant au groupe principal 2 ou 3 du tableau périodique avec un anion au polymère est de 1/100 à 500/100, de préférence de 10/100 à 90/100.

9. Procédé selon l'une quelconque des revendications 1 à 8, dans lequel le rapport pondéral du complexe d'intercalation aux graines de colza ou au produit à base de colza est de 1/10000 à 300/1000, de préférence de 1/1000 à 50/1000.

10. Graines de colza ou produit à base de colza, ou un mélange de ceux-ci formé avec un ou plusieurs autres fourrages, susceptible(s) d'être obtenu(es) par le procédé selon l'une quelconque des revendications 1 à 9, où lesdites graines de colza ou ledit produit à base de colza contien(nen)t un complexe d'intercalation d'un élément choisi parmi Al, Ca et Mg formé avec un anion et un ou plusieurs polymères.

11. Utilisation des graines de colza ou du produit à base de colza, ou d'un mélange de ceux-ci formé avec un ou plusieurs autres fourrages selon la revendication 10, qui contien(nen)t un complexe d'intercalation d'un élément choisi parmi Al, Ca et Mg formé avec un anion et un ou plusieurs polymères, dans l'alimentation des animaux.

12. Utilisation selon la revendication 11, dans laquelle les graines de colza ou le produit à base de colza, qui contien(nen)t un complexe d'intercalation d'un élément choisi parmi Al, Ca et Mg formé avec un anion et un ou plusieurs polymères, est/sont utilisé(es) seul(es) ou mélangé(es) avec des fourrages pour animaux et éventuellement avec des prémélanges et/ou des suppléments.

13. Fourrage pour animaux comprenant des graines de colza ou un produit du colza, ou un mélange de ceux-ci formé avec un ou plusieurs autres fourrages selon la revendication 10, seul(es) ou mélangé(es) avec des fourrages pour animaux et éventuellement avec des prémélanges et/ou des suppléments, dans lequel lesdites graines de colza ou ledit produit à base de colza contien(nen)t un complexe d'intercalation d'un élément choisi parmi Al, Ca et Mg formé avec un anion et un ou plusieurs polymères.
